Europäisches Patentamt

European Patent Office

Office européen des brevets

(19)

(11) **EP 0 956 131 B1**

(12) **EUROPEAN PATENT SPECIFICATION**

(45) Date of publication and mention
of the grant of the patent:
**04.06.2003 Bulletin 2003/23**

(51) Int Cl.⁷: **B01D 29/01**, B01D 29/11,
B07B 1/46

(21) Application number: **98900762.0**

(22) Date of filing: **13.01.1998**

(86) International application number:
**PCT/NL98/00024**

(87) International publication number:
**WO 98/030309 (16.07.1998 Gazette 1998/28)**

(54) **SCREEN WITH IMPROVED STRENGTH PROPERTIES AND ASSEMBLY OF SUCH A SCREEN WITH A SUPPORT SCREEN**

SIEB MIT VERBESSERTER FESTIGKEIT SOWIE AUS EINEM SOLCHEN SIEB MIT EINEM STÜTZSIEB BESTEHENDE EINHEIT

TAMIS POSSEDANT DES PROPRIETES AMELIOREES DE RESISTANCE MECHANIQUE ET ENSEMBLE CONSTITUE PAR CE TAMIS ET UN TAMIS SUPPORT

(84) Designated Contracting States:
**AT BE CH DE DK ES FR GB GR IT LI NL SE**

(30) Priority: **14.01.1997 NL 1004999**

(43) Date of publication of application:
**17.11.1999 Bulletin 1999/46**

(73) Proprietor: **STORK VECO B.V.**
**6961 LB Eerbeek (NL)**

(72) Inventor: **KORSSE, Johannes**
**NL-7326 AS Apeldoorn (NL)**

(74) Representative: **Volmer, Johannes Cornelis**
**Exter Polak & Charlouis B.V.,**
**P.O. Box 3241**
**2280 GE Rijswijk (NL)**

(56) References cited:
**GB-A- 2 287 200**       **US-A- 3 713 541**
**US-A- 4 740 303**

**Description**

The invention relates to a screen for separating particulate materials from a liquid mass, which screen comprises a pattern of slot-shaped passage openings, separated by walls, for the liquid, wherein the pattern comprises first pattern elements having three groups of passage openings, the passage openings within a group having the same orientation, which is different from the orientation of the passage openings of the other groups within said first pattern element.

A screen of this kind is known, for example, from US-A-4,740,303. This patent discloses a metal filter foil having groups of elongated slits, which form filter openings. In each group having the form of so called streets the slits are parallel to one another, and the slits of different streets form an angle with one another. It is said that such a metal filter foil, which is used as a coffee filter or in centrifuge baskets, has less tendency to distortion. An expressly disclosed embodiment of such a filter foil comprises streets of filter slits, which are arranged in three different directions, which correspond to the direction of the sides of an equilateral triangle.

A herringbone pattern of a screening panel for use in the screening of solid materials from a slurry is also disclosed in GB-A-2287200. Such a panel comprises a plurality of slotted apertures, which apertures are arranged in sets with their longitudinal axes in parallel with either of a first plane or a second plane, which is angularly displaced to the first plane, in order to improve the screening efficiency.

Sugar screens are used as means for separating sugar crystals from massecuite. Various patterns of the slot-shaped passage openings are used in the known sugar screens which are used in Europe. Examples of such patterns comprise a straight pattern of slot-shaped passage openings, a staggered pattern of passage openings, streets of passage openings, as well as a pattern in which the passage openings are arranged in a half-brick formation. For all these patterns, the orientation of the slot-shaped passage openings, as well as the slot length thereof, are identical.

In other known sugar screens, which are used primarily in America, the passage openings have a round shape.

These known sugar screens are placed on a support screen. The assembly of support screen with sugar screen is positioned on a conical carrier, which carrier is a component of the centrifuge in which the sugar crystals are separated from massecuite. Due to the continuous load on the sugar screen caused by the massecuite fed in, the sugar screen is pressed into the support screen, resulting in plastic deformation. As a result of this deformation, the passage of the slot-shaped holes becomes larger, with the result that more sugar crystals are lost. Although loss of sugar is inevitable when using centrifuges, for economic reasons it is desirable to reduce this loss.

Other applications in which deformation of the screen also occurs as a result of the forces exerted thereon by the masses to be separated, comprise separation processes in the chemical industry, the pharmaceutical industry and the processing industry, for example the dewatering of slack, salt and the like.

The deformability of a screen is largely determined by the geometry of the pattern, the orientation of the slot-shaped passage openings, the slot length thereof, and the thickness of the screen. The industrial functioning of the screen is determined by the slot width (separating ability) and the open surface (capacity).

It is known from US-A-3,730,768 that the continuous strength of a sugar screen for use in a discontinuous centrifuge is an important factor with regard to the service life thereof. In a discontinuous centrifuge, changing loads are exerted on the sugar screen. The screen described in said patent comprises a large number of round passage openings, which are distributed such that each set of four adjacent passage openings are positioned at the corners of a rectangle. Using a configuration of this type, the stress concentrations are minimal, as a result of which the changing load is taken up in an advantageous manner. The dimensions of the passage openings and the open surface, which owing to this choice of pattern cannot vary too much, are cited as limiting conditions. Furthermore, it should be noted that the passage openings of screens for discontinuous centrifuges are larger than those of screens for continuous centrifuges, specifically approximately 0.55 mm and 0.13-0.04 mm, respectively.

There are various methods for producing a screen, in particular sugar screens. One of these methods is electroforming. Screens electroformed in a standard manner are very satisfactory in terms of separating properties. However, they have the drawback of a short service life compared to, for example, stainless steel screens, which is shorter by a factor of 2 to 5. Reasons cited for the shorter service life are, inter alia, the deformability which has already been discussed above and also the susceptibility to corrosion.

In screens electroformed in a standard manner, the thickness of the screen is determined by the design of the pattern. A screen should have a certain passage, that is to say separating capacity. A certain thickness is then associated with this passage and the pattern. The thickness of the screen electroformed in a standard manner therefore also cannot be increased in order to reduce the deformability.

Another method of producing sugar screens consists in making the passage openings in a stainless steel plate using a laser. One advantage of such a method is that a thicker plate can be used as starting material, in order to reduce the deformability. However, drawbacks of this method are the high costs of the starting material and the high costs of the laser technology used. In addition, in screens produced in such a manner, the orientation of the slot-shaped passage openings, and also the slot length thereof, are identical.

The object of the present invention is to provide a screen which has an improved flexural stiffness and tensile strength compared to the known screens while retaining the same separating ability and capacity.

A further object of the invention is to provide a screen of this kind which is less orientation-sensitive, i.e. the tensile strength, elongation and flexural stiffness are virtually equal in all directions.

In the screen according to the invention, a group of passage openings having a certain orientation of said first pattern element is also adjacent to groups of passage openings of neighbouring pattern elements, which groups have a different orientation. Such a screen comprises pattern elements, which are composed of three groups of more than one passage opening, wherein all the passage openings within a group are orientated in the same direction, this orientation direction being different from the orientation direction of the passage openings of the other groups within the same first pattern element. In other words, a pattern element comprises a first group of first passage openings having a first orientation, a second group of second passage openings having a second orientation and a third group of passage openings having a third orientation. According to the invention a group of passage openings having a certain orientation of such a given pattern element is adjacent to one or two groups of the same pattern element having said other orientations, but also adjacent to groups of passage openings of neighbouring pattern elements, which groups have a different orientation from the above certain orientation. The above mentioned neighbouring pattern elements can be similar to said given pattern element, which is a preferred embodiment, or further pattern elements comprising one or more groups of passage openings having a further orientation or orientations. The number of such further pattern elements is not critical. It should be pointed out that the term "orientation" is to be understood as meaning the direction of the largest dimension (slot length).

Groups of slot-shaped passage openings with at least three different orientations are present in the screen according to the invention (and thus also walls with different directions), as a result of which the screen has a greater tensile strength and flexural stiffness than a screen having slot-shaped openings with a single orientation. The forces exerted by the liquid mass, such as massecuite, are taken up by the skeleton of walls in a more favourable manner than in known screens. The result of this is a longer screen service life.

Since the strength properties of the screens according to the invention are improved, they can be used as a self-supporting screen and as a screen on a support screen both with a continuous load and with a changing load. Specific examples comprise (dis)continuous centrifuges, in particular continuously operated sugar centrifuges.

The choice of material of the screen is not critical, suitable materials being metal, in particular nickel and stainless steel, but also titanium or combinations of metals, and plastics can be considered. Obviously, a suitable production method will be selected depending on the type of screen material.

The screen according to the invention can be produced using all conventional methods, including standard electroforming, cutting using a laser or an electron beam, punching, etching, etc. Conventional electroforming techniques (in which metal is grown over photoresist regions and the hole size thus decreases as the thickness increases) result in several design limitations. Modified electroforming techniques, such as a thick-film technique (in which growth takes place between non-conductive structures) and growth with forced flow of the electrolyte, do not have these limitations and can thus advantageously be used.

Also, the positioning of the screen on an optionally present support screen is less critical for the screen according to the invention.

According to a preferred embodiment of the screen according to the invention the first pattern elements are arranged in a regular manner.

According to a further preferred embodiment of the screen according to the invention having first groups of first passage openings with a first orientation and groups of second passage openings with a second orientation and third groups of third passage openings with a third orientation, a group with a certain orientation is arranged in a region having the shape of a hexagon, which region is surrounded on its six sides by alternately arranged hexagonal regions with passage openings with the other orientations. Using a honeycomb structure of this kind for the pattern of slot-shaped passage openings, the required tensile strength is achieved by the material which is present in the separating plane of adjacent regions with different orientations. The improved flexural stiffness is achieved by means of the alternating orientation of the slot-shaped passage openings in the various regions. Advantageously, the regions have the shape of a regular hexagon, more preferably the shape of a hexagon, the sides of which are of an equal length.

In yet another preferred embodiment of the screen according to the invention, the groups of a first pattern element are arranged around a circular passage opening.

Advantageously, the slot length of the passage openings in a group is unequal. This is important in particular for electroformed screens, in which the "honeycomb structure" needs to be well filled up in order to be able to achieve the required open surface for a given slot width. The slot length should not be too large, since otherwise the strength will decline, as will be explained in more detail below.

In order to achieve an identical tensile strength in all directions, the pattern is preferably formed such that virtually the same solid surface formed by the walls is present in all directions.

As is known in the art, the dimensions and the shape of the slot-shaped passage openings are important for

**EP 0 956 131 B1**

the separating capacity and the passage thereof. In an electroformed screen according to the invention, a width of the slot-shaped passage openings of between 40 and 130 μm, a length of between 500 and 1200 μm, a passage of 6.5-20%, more preferably 6.5-14%, and a thickness of the screen of 200-300 μm are preferably used. The alternating orientation of the passage openings is likewise beneficial for increasing the flexural stiffness and tensile strength of a screen, the passage openings being obtained by means of other conventional techniques.

The invention furthermore relates to an assembly of a screen according to the invention and a support screen. According to a preferred embodiment of such an assembly the dimensions of the first pattern element of the screen according to the invention is smaller than the mesh width of the support screen.

The invention will be explained below with reference to the following drawing, in which:

Fig. 1 shows the bending of a sugar screen under the influence of the load exerted by the massecuite;
Figs. 2 a-d show four known pattern designs;
Fig. 3 shows the pattern design of Fig. 2c in more detail;
Fig. 4 shows a first embodiment of a screen according to the invention;
Fig. 5 shows a second embodiment of a screen according to the invention;
Fig. 6 shows a third preferred embodiment of a screen according to the invention;
Fig. 8 shows a fourth preferred embodiment of a screen according to the invention;
Fig. 9 shows a graph of the force as a function of the tension angle of a screen in accordance with Fig. 3 electroformed in a standard manner, at 0.5% elongation;
Fig. 10 shows a graph of the force as a function of the tension angle of another screen in accordance with Fig. 2b electroformed in a standard manner, at 0,5% elongation;
Fig. 11 shows the relationship between the slot length and thickness of an electroformed screen with a given pattern;
Fig. 12 shows the relationship between the isotropy quotient and the slot length of the screen in accordance with Fig. 11;
Fig. 13 shows the relationship between the relative strength and the slot length of the screen in accordance with Fig. 11;
Fig. 14 shows a graph of the force as a function of the tension angle of a screen in accordance with Fig. 3 at a sagging of 0.5 mm;
Fig. 15 shows a graph of the force as a function of the tension angle of a screen in accordance with Fig. 8 electroformed in a standard manner, at 0.5% elongation;
Fig. 16 shows a graph of the force as a function of the tension angle of a screen in accordance with Fig. 8 at a sagging of 0.5 mm;
Fig. 17 shows a graph of the force as a function of the tension angle of another screen in accordance with Fig. 8 electroformed in a standard manner, at 0.5% elongation;
Fig. 18 shows a graph of the force as a function of the tension angle of another screen in accordance with Fig. 8 at a sagging of 0.5 mm;

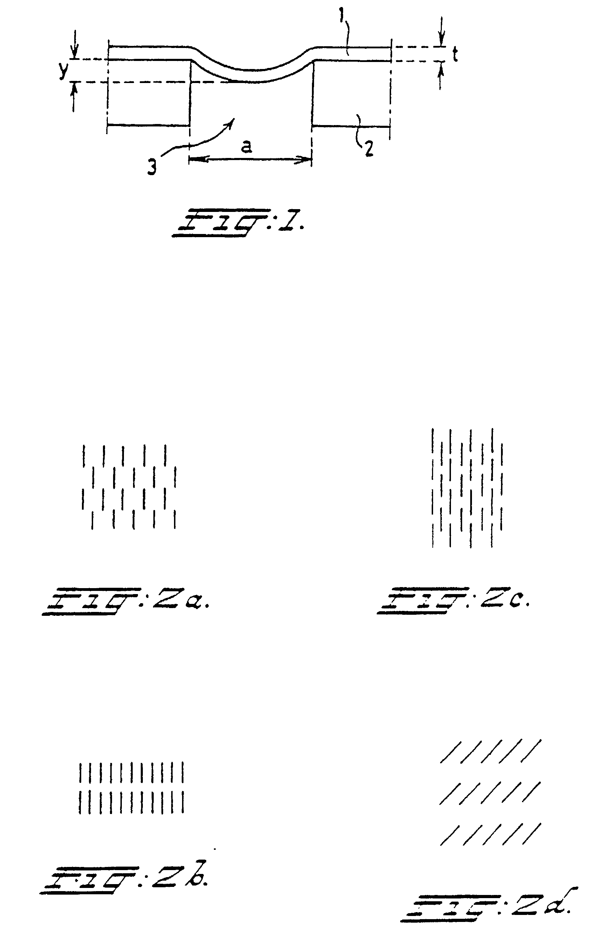

Fig. 1 shows an assembly of a sugar screen 1 and a support screen 2 with mesh width a, as is used in a centrifuge for separating sugar crystals out of massecuite. The sugar screen 1, having passage openings which are not shown, is positioned on a support screen 2 having coarse openings with a width in the order of magnitude of 5-8 mm. The thickness of the support screen is a few millimetres. As is shown in this figure, the sugar screen 1 is pressed into the large openings 3 of the support screen 2 under the effect of the forces exerted by the massecuite. As a result of this bending, the shape of the fine passage openings in the sugar screen changes, so that the passage becomes larger, with the result that more sugar crystals pass through the sugar screen and the yield is thus reduced.

In order to understand the invention correctly, a distinction should be made between the deformation resulting from a tensile stress and a bending stress. In practice, both stresses frequently occur simultaneously, but the effect of the screen parameters varies with the type of stress. The effect of the screen thickness can be understood from the formula for the sagging of a flat, unperforated plate which is supported on a square opening with mesh width a (cf. Figure 1)

$$\text{max. } y = 0.0138 \, \frac{q \, a^4}{E \, t^3} \tag{1}$$

("Formulas for Stress and Strain", Raymond J. Roark, Warren C. Young, McGraw Hill Book Company, 5th edition, p. 392), where:

max. y = the maximum sag in mm,

q = the stress in N/mm$^2$

a = the mesh width in mm

E = the flexural modulus of elasticity in N/mm$^2$, and

t = the plate thickness in mm.

The resistance to bending is therefore proportional to the plate thickness to the power of three. The resistance to elongation is directly proportional to the plate thickness. It can also be derived from the above formula (1) that the selection of the support screen is extremely decisive for the deflection which occurs. The mesh width of support screens for use in sugar centrifuges is generally in the range from 5-8 mm. Other mesh widths are customary for other applications. In practice, no account is generally taken of the effect of the mesh width.

If the above formula is applied to a perforated plate, the pattern of openings affects the value of the modulus of elasticity. In other words, the E-moduli for a perforated plate and a solid plate made of the same material and having the same thickness are different. Furthermore, it is known that a plate which is perforated in a regular manner exhibits an anisotropic behaviour, that is to say the resistance to elongation and bending are dependent on the direction of the force exerted. This directional dependence applies to round openings, but to a greater extent to patterns with slot-shaped openings. In screens with patterns of slot-shaped passage openings, the weakest direction is therefore decisive for the degree of deformation and therefore for the action and service life of the screen. Despite this drawback, slotted patterns only are used for sugar screens in continuously operated sugar centrifuges, since screens with patterns of round openings of small diameter (< 90 microns) cannot yet be achieved technically with the required strength and open surface which would make an economically responsible and practicable separation process possible. The choice of slotted patterns is therefore a useful compromise.

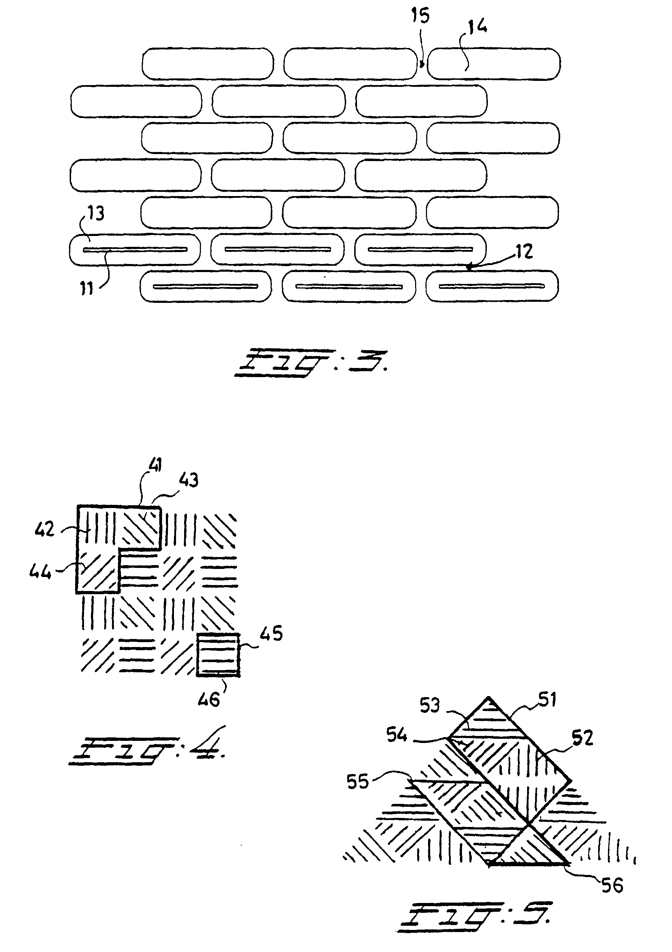

Figure 2 shows a considerably simplified representation of a number of known pattern designs for the passage openings (illustrated as small dashes) of a sugar screen. Figure 2a shows a staggered pattern, as is used, for example, in punched screens. In Figure 2b, the slot-shaped passage openings are arranged close together in the form of so-called streets. The pattern shown in Figure 2c is a so-called half-brick formation. Figures 2b and 2d show patterns in which the passage openings are made in a stainless steel plate using a laser. In practice, these patterns are not as regular as sketched in Figs. 2b and 2d, that is to say the number of slots per unit length is not identical everywhere, so that the streets are staggered irregularly. It is considered that this is a limitation of this production technique. In all these known patterns, the orientation of the slot-shaped passage openings, and the dimensions thereof, are identical, as a result of which the flexural strength in the longitudinal direction of the slot-shaped openings is low.

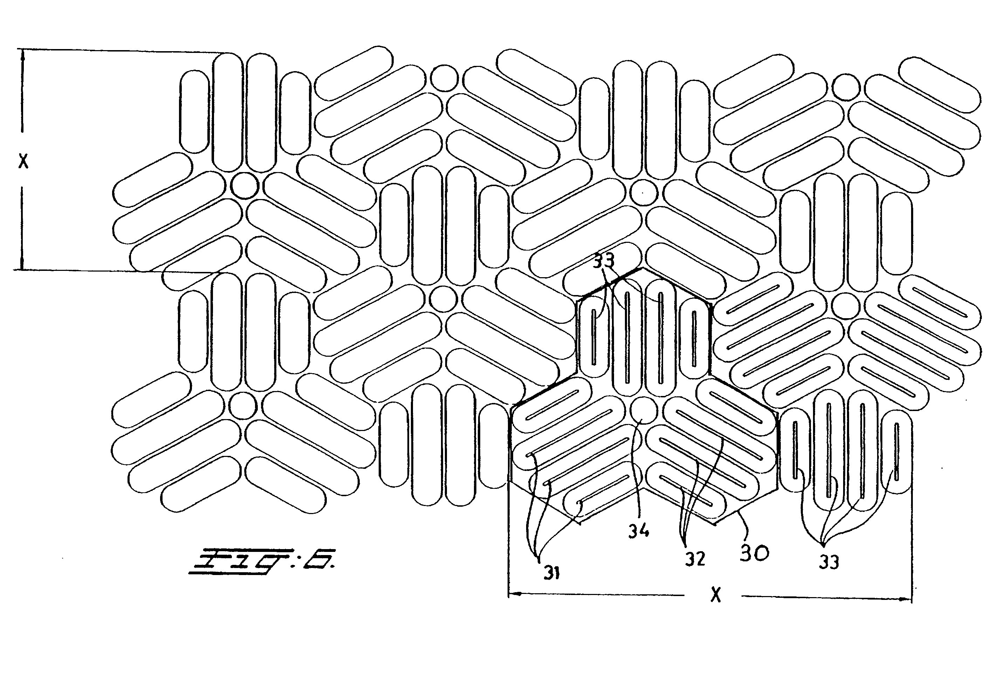

A screen pattern as shown diagrammatically in Fig. 2c is also illustrated in Fig. 3. The slot-shaped passage openings 11 are surrounded by metal walls 12. These walls 12 comprise regions 13, which are slightly recessed around the openings 11 as a result of the production method.

In order to produce a screen of this kind by electroforming, a layer of photoresist is arranged on a metal matrix, which layer is exposed and developed such that islands 14 of photoresist remain, between which the metal 15 of the matrix can be seen. The metal walls 12 are then formed on the exposed metal 15 of the matrix by electroforming, metal also growing over the resist islands 14. After reaching the required thickness, the screen is removed from the matrix. The shape of the recessed regions 13 corresponds to the shape of the photoresist islands 14.

The screen pattern according to Fig. 2c and Fig. 3 has frequently been used over approximately the last 30 years for nickel (electroformed) screens. Other patterns, such as those in accordance with Figs. 2a, 2b and 2d, are used in particular for stainless steel screens. The tensile strength of the screens in accordance with Fig. 2c is greater in the direction of the slot length than in a direction perpendicular to the slot length. The results of tensile tests for three different electroformed screens having a screen pattern in accordance with Fig. 2c are given in Table 1. In this table, the type indication 36/9 means that the number of slots per linear inch (the so-called mesh number) is 36 in one direction and in the direction perpendicular thereto it is 9. The type and the properties of a screen are fixed if, in addition, the slot width, length and thickness are given. The types 36/9 and 40/10 are frequently used as sugar screens. The industrial functioning, separating ability (slot width) and capacity (open surface) is virtually equal for these types of screens.

Table 1.

| Tensile tests on electroformed nickel screens with a slot width of 60 μm | | | | | | |
|---|---|---|---|---|---|---|
| TYPE | SLOT LENGTH (μm) | OPEN SURFACE (%) | THICKNESS (μm) | F// (N) | F$_\perp$ (N) | I.Q. |
| 36/9 | 2133 | 6.4 | 313 | 1100 | 145 | 7.6 |
| 40/10 | 1693 | 6.3 | 266 | 1125 | 187 | 6.0 |
| 40/14 | 1200 | 6.3 | 290 | 1200 | 320 | 3.8 |

In Table 1 and the following tables, F// and $F_\perp$ represent the maximum tensile forces from the test. At these forces, the screens have already been substantially plastically deformed. The I.Q. factor is the isotropy quotient, the ratio between F// and $F_\perp$. An I.Q. of 1 means that the screen behaves reasonably isotropically. A more general formula for the isotropy quotient is I.Q. = $F_{max}/F_{min}$, where $F_{max}$ and $F_{min}$ are the maximum and minimum tensile forces, respectively, which are determined by carrying out tensile tests in all directions. Using this approach, an I.Q. of 1 means that the screen is completely isotropic and is therefore direction-insensitive.

It can be concluded from the above results that the screens having a pattern in accordance with Fig. 2c are extremely direction-sensitive. What is surprising is the strong influence of the slot length on the strength. Despite its greater thickness, the 36/9 type is weaker in the weakest direction ($F_\perp$) than the 40/10 type. Even shorter slits, such as in type 40/14, provide a further improvement to the tensile strength in the weakest direction.

Owing to their better resistance to corrosion, screens made of stainless steel are currently being used ever more frequently. These are often produced by punching, cutting with a laser beam or an electron beam. However, the choice of material is much less important for the deformability than the screen pattern, as is shown by Table 2.

Table 2.

| Comparison of a nickel electroformed screen with a stainless steel screen cut using an E-beam | | | | | | |
|---|---|---|---|---|---|---|
| TYPE | THICKNESS (μm) | SLOT LENGTH (μm) | OPEN SURFACE (%) | MATERIAL | HARDNESS ($H_V$) | $F_\perp$ 2% ELONGATION (N) |
| 50/11 (Fig. 2b) | 195 | 900 | 4.6 | Ni | 200 | 600 |
| 24/12 (Fig. 2a) | 280 | 1900 | 4.5 | AISI 316 | 190 | 100 |

As can be seen from Table 2, it is easier to deform the thicker stainless steel screen than the thin nickel screen, even though the industrial functioning of both screens is identical. The reason for this lies in the unfavourable screen pattern in accordance with Fig. 2a, and in particular the slot length thereof.

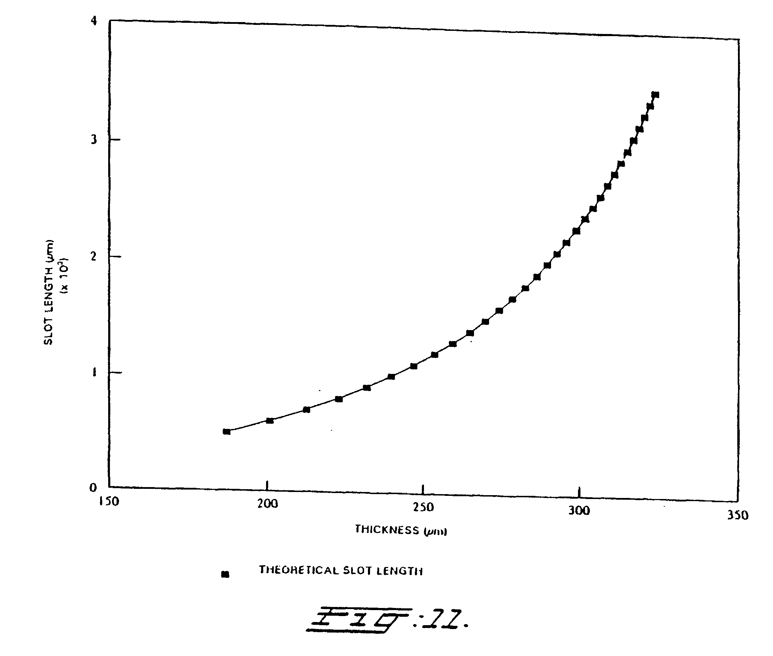

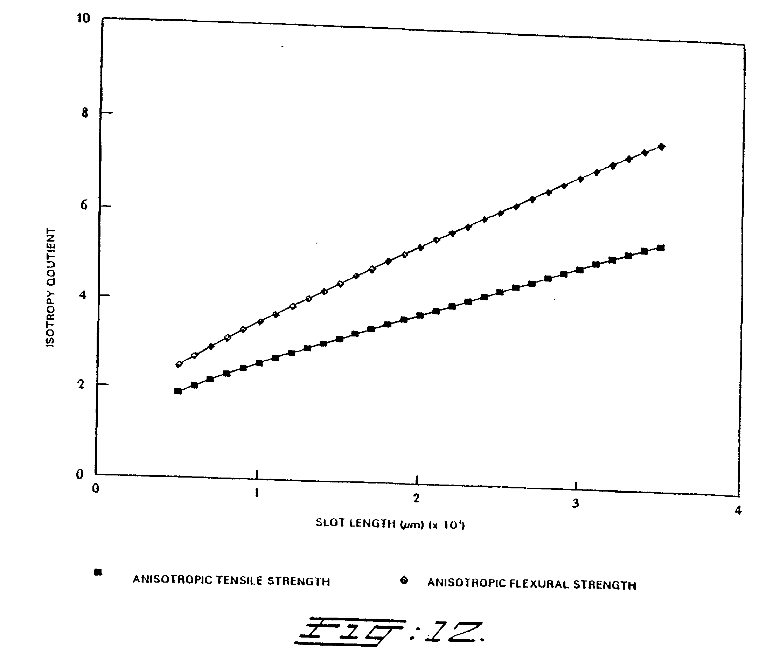

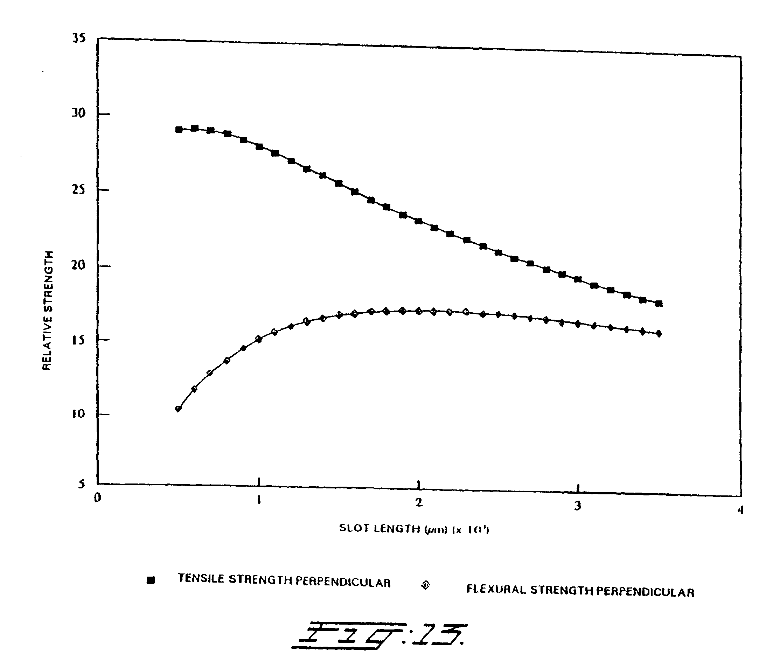

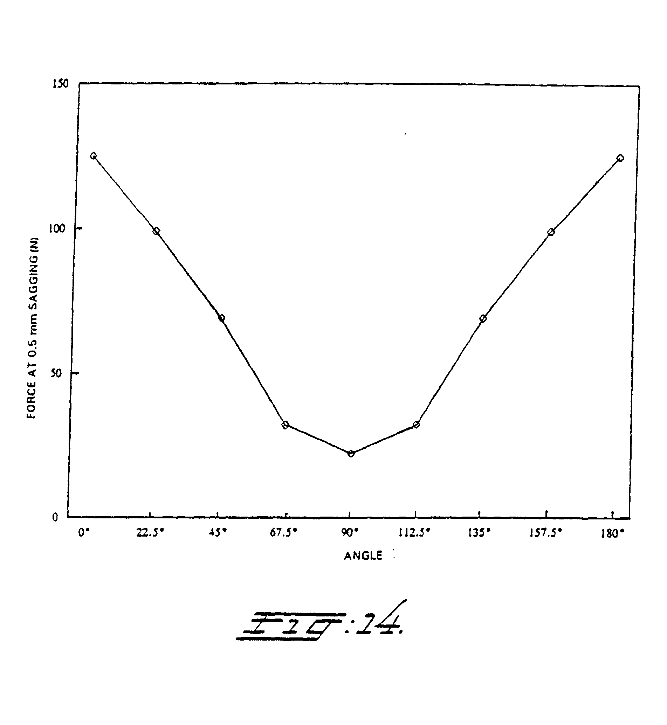

It has been found from further tensile and bending tests on electroformed screens having the screen pattern shown in Fig. 2c that the I.Q. of these screens is in the range from 4-40 for tensile stress and 3-20 for flexural stress. It has also been found from tests that screens having a pattern in accordance with Fig. 2b with short slots are stronger and have a lower direction sensitivity. The anisotropic character of screens having a pattern in accordance with Fig. 2c and Fig. 3 (type 36/9; thickness = 310 μm; slot width = 55μ ;open surface = approx. 5.5%) is illustrated in Fig. 9. In this figure, the tensile stress (force at 0.5% elongation) is plotted against the tension direction, a tension direction of 0° being defined as parallel to the slot (longitudinal) direction. This figure shows that the screens can be subjected to a relatively heavy load in the direction of the slots without becoming significantly deformed, but that the screens are much weaker in other directions. Fig. 10 shows the results of a screen electroformed in a comparable manner having a pattern in accordance with Fig. 2b (type 50/11; thickness = 185 μm; open surface = approx. 6.5%), from which it is clear that a screen of this kind is stronger, despite its lower thickness. In the weakest direction, this screen is approximately 3 times stronger than the current 36/9 screen. However, the I.Q. is still approximately 2.5, which means that the anisotropy is still relatively great. It is noted that the weakest direction using this screen is 45°.

It has been found from the large number of tests that the directional sensitivity is always high (I.Q. ≥ 2) when the slots point in the same direction, irrespective of the pattern used. A pattern in accordance with Fig. 2b gives better strength properties than the other patterns shown in Fig. 2. Furthermore, the directional sensitivity appears to be higher as the slot length increases. These results correspond to model calculations carried out for screens having a pattern in accordance with Fig. 2b. These calculations further show that the trends in tensile strength and flexural strength can vary considerably: an improvement in the flexural strength may result in an impairment of the tensile strength (determined in the weakest direction).

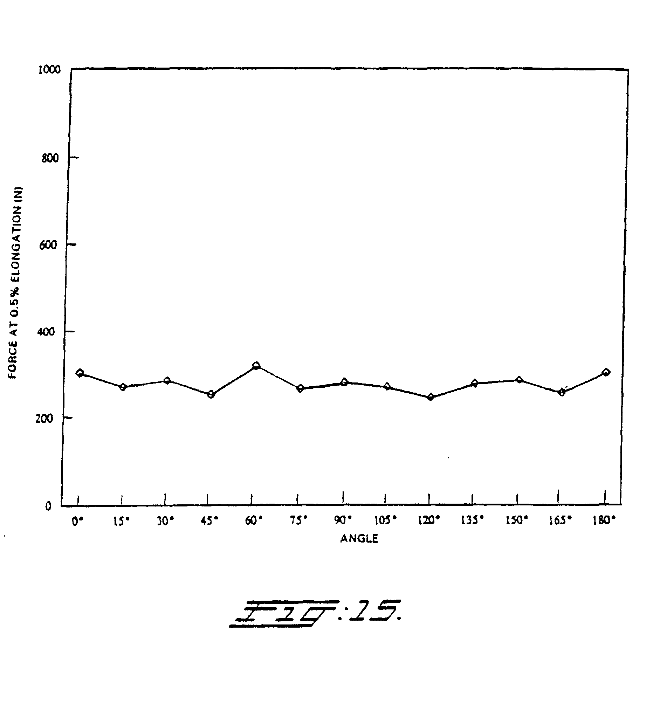

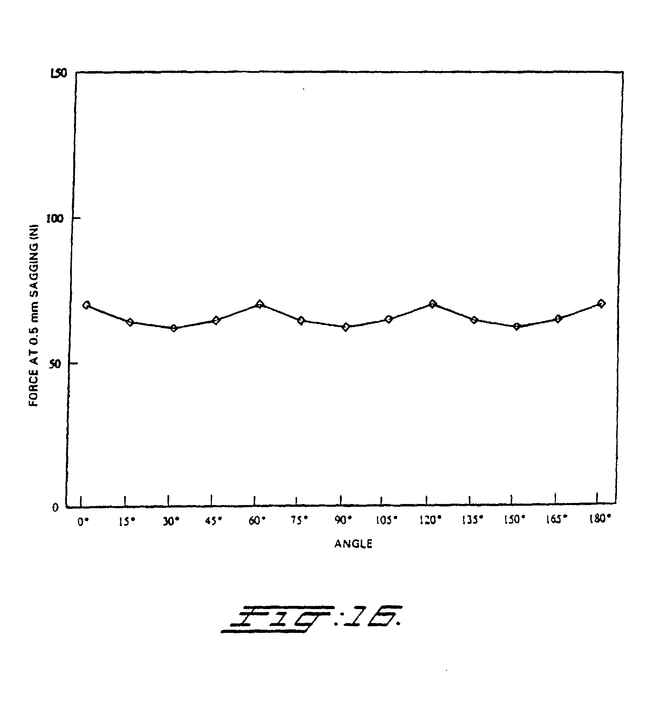

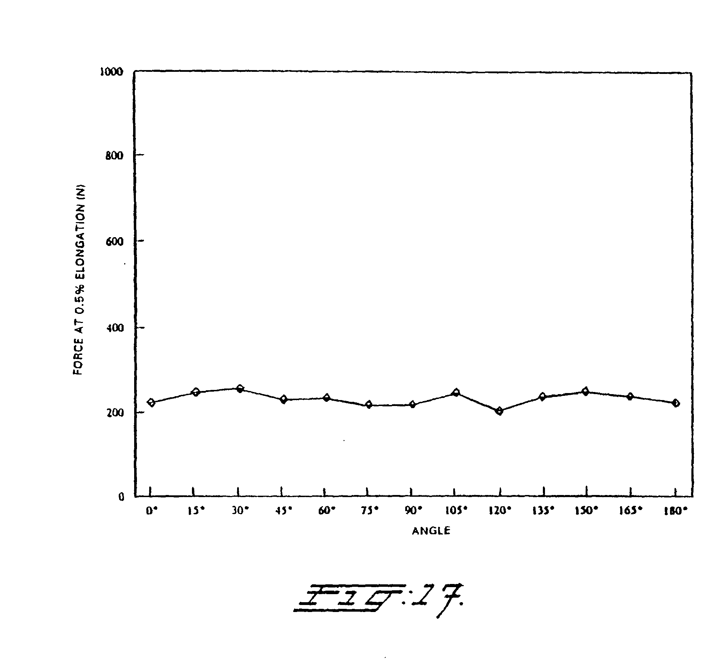

Using conventional electroforming, the screens are produced by allowing nickel to grow over a (photo)resist pattern of a matrix (mandrel). If a relatively small hole size is desired, this means that growth is allowed to continue for longer and thus a thicker screen is obtained, but with a smaller open surface. Slot width, slot length, thickness and open surface are arithmetically linked to one another for a fixed pattern. For example, it is quite possible to vary the slot length for a fixed slot width and for a fixed open surface by varying the design. Using a model calculation, this was carried out for a screen pattern in accordance with Fig. 2b (slot width 60 μm, open surface 6.5%). Fig. 11 shows the relationship between the slot length and thickness, as applicable to an electroformed screen of this kind. Fig. 12, which relates to the same type of screen, shows that the directional sensitivity increases with increasing slot length. This is true both for the flexural and tensile stress. It can be concluded from Fig. 13 that it is not possible to optimize an electroformed screen having a street pattern in accordance with Fig. 2b simultaneously for tensile and flexural stress, since the slot length and thickness change simultaneously.

This limitation, which is inherent to electroforming, obviously does not apply to other known production techniques, such as cutting using a laser beam or electron beam. In principle, the design freedom for the pattern is also greater using these techniques, so that it is now possible to optimize the street pattern for tensile and flexural stress simultaneously. Modified electroforming in accordance with the passage principle provides a comparable freedom of design; a thickness can be selected for a selected pattern, so that a screen having a very high passage and high strength can be obtained, which is a considerable advantage in electroforming.

As already stated above, the object of the invention is to improve the flexural stiffness and tensile strength of a screen while maintaining the same slot width and open surface, in particular for electroformed screens, since the cost price of the screen is not particularly dependent on the pattern selected, but the cost price increases with increasing thickness. Furthermore, the object of the invention is to reduce the anisotropic behaviour of the screen.

According to the invention, this is achieved by means of a screen as defined in the attached claim 1, which in other words comprises a network of solid paths, which paths enclose slots, being (regularly) arranged in groups, with three or more different orientations, wherein no large streets of slots having the same orientation are present. Preferably, the dimensions of the first pattern element are smaller than the mesh width of the support screen, if present.

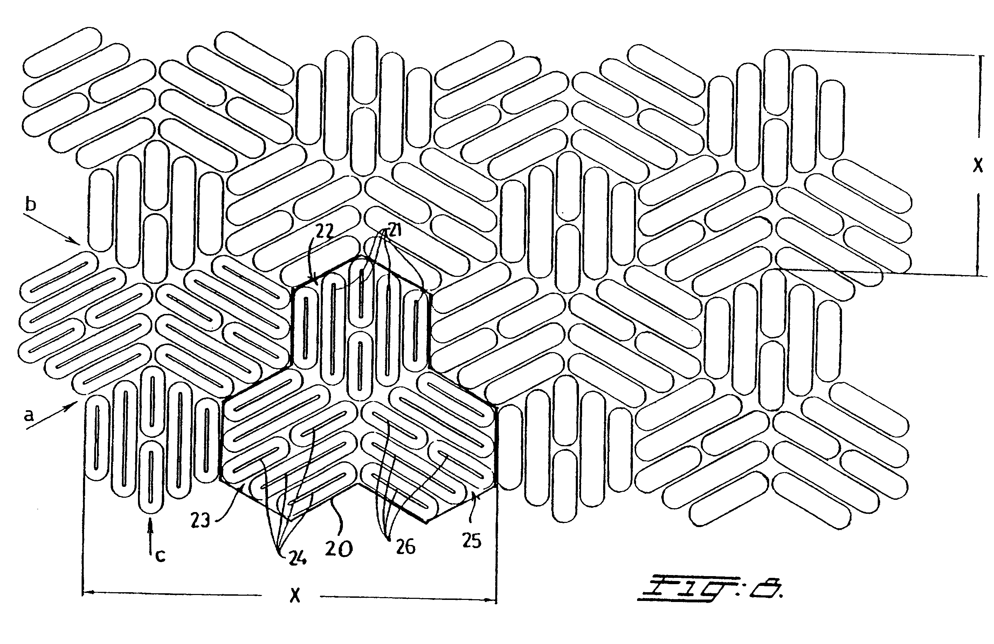

Fig. 4 shows a first embodiment of a screen according to the invention. The pattern thereof is composed of a first pattern element 41 having three groups of passage openings, a first group of first slots 42 having a first orientation, a second group of second slots 43 having a second orientation, and a third group of slots 44 having a third orientation. Said orientations within a group are equal, while being different with respect to the orientations of the other groups of slots within the same first pattern element. The total pattern further comprises an additional pattern element 45 with fourth slots 46 having a fourth orientation. The imaginary boundaries of the first pattern element 41 and additional pattern element 45 are shown by a thick line. As can be seen from this figure the four groups have the same area. The slot length of slots 43 and 44 is varied.

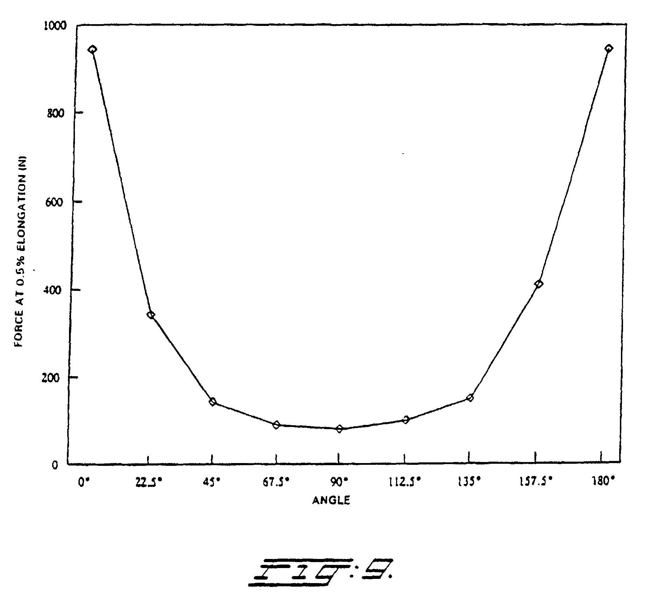

A second embodiment of a screen according to the invention is shown in Fig. 5. The pattern thereof comprises a first pattern element 51 in the form of an imaginary rectangle, wherein three groups of slots having different orientations are arranged. In this case the area of the group of slots 52 having a "vertical" orientation is twice the area of the groups of slots 53 respectively 54 having other orientations. The pattern also comprises a second pattern element 55 and a third pattern element 56. Said second pattern element 55 is composed of three groups of slots having different orientations, while the third element 56 comprises one group of slots, the group having the imaginary shape of a triangle.

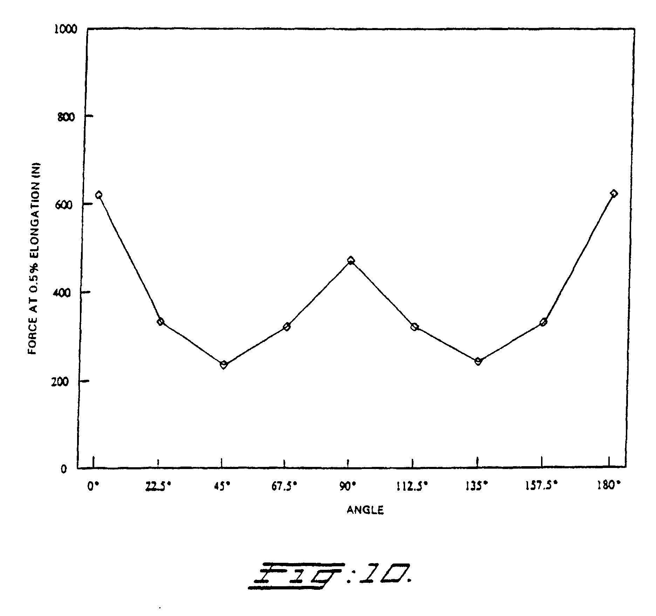

Fig. 6 illustrates a first preferred pattern of passage openings, which comprises a first pattern element 30 containing first groups of first passage openings 31 having a first orientation, second groups of second passage openings 32 having a second orientation, third groups of third passage openings 33 having a third orientation and fourth circular passage openings 34, the first, second and third groups being arranged around a circular passage opening 34. Each group has the shape of an imaginary hexagon. Within a group the slot length is varied. In this embodiment the total pattern is composed of first pattern elements 30.

Figure 8 shows a second preferred embodiment of a pattern design for the passage openings in a screen according to the invention having a first pattern element 20, first passage openings 21 having a first orientation being arranged in a region 22 in the form of a regular hexagon. Each region 22 having passage openings 21 is surrounded by three hexagonal regions 23 having passage openings 24 which have an orientation which is rotated through 120° with respect to the first orientation, as well as three hexagonal regions 25 having passage openings 26, the orientation of which is rotated through 240° with respect to the orientation of the first passage openings 21 (and thus through 120° with respect to the orientation of the second passage openings 24). As emerges clearly from the figure, the slot length of the passage openings is varied within each group. The letters a, b, c denote the axes which determine the tensile strength of the screen. The alternating orientation of the slot-shaped passage openings 21, 24 and 26 determines the flexural stiffness.

The improved strength characteristics - tensile strength and flexural stiffness - of the screens according to the invention enable to cut a (sugar) screen having the required shape from such a screen without having to take into account the orientation of the slots with respect to the forces applied during use. Furthermore the service life is improved.

Tests were carried out on screens having the patterns shown in Figs. 2b, 2c (= Fig. 3), 6 and 8. The data of the screens are shown in Table 3. Where this table refers to Fig. 6, this means a pattern where the circular openings were not present. The screens were produced by a standard electroforming method.

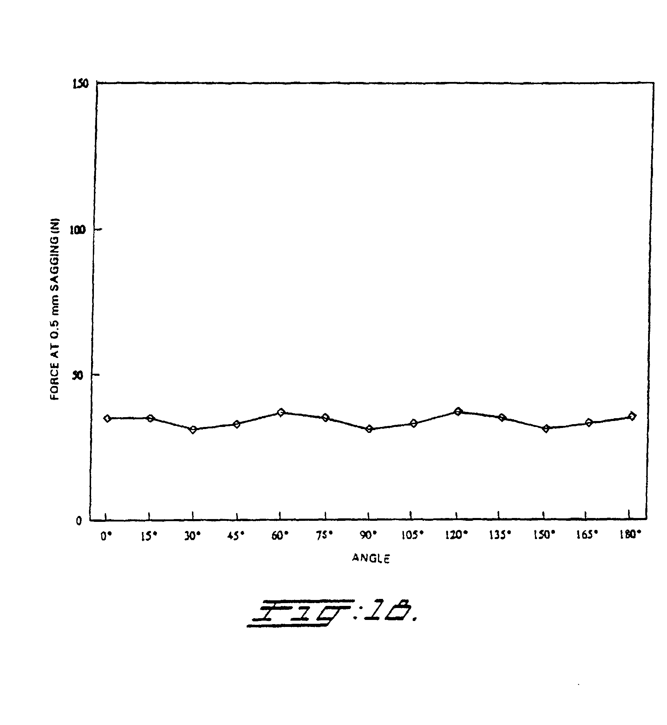

The tensile strength as a function of the tension angle at 0.5% elongation is shown in Figs. 9, 10 and 15 and 17 respectively for the patterns shown in Figs. 2c, 2b and 8 (two different types). The force as a function of the tension angle at 0.5 mm sagging is shown in Fig. 14, 16 and 18 respectively for the patterns shown in Figs. 2c and 8 (two different types). Figs. 15 and 16 belong to a screen according to Fig. 8, wherein the thickness is 310 µm, the slot width is 65 µm and the open area is 7.0 %. Figs. 17 and 18 are the test results of a screen having the same pattern, however having a thickness of 255 µm, a slot width of 70 µm and an open area of 8.5 %.

From the test results it can be seen that a reduction in the directional sensitivity can be achieved, which will improve the strength of the screen. The hexagonal designs are excellently suitable for this purpose.

If the slot direction is varied in a regular manner, as in Fig. 8 having hexagon groups with parallel slots, a screen design can be made which exhibits a virtually isotropic behaviour. The process technology characteristic is equal to that of the 36/9 screen in accordance with Fig. 9, that is to say the slot width and open surface are identical, while the strength is improved by a factor of 4. The I.Q. approaches the value of 1 significantly.

Table 3.

| Measurements of various screen patterns | | | | |
|---|---|---|---|---|
| SCREEN TYPE | DIMENSION X (mm) | SLOT LENGTH (mm) | THICKNESS (mm) | OPEN SURFACE (%) |
| hexagon (Fig. 8) | 5.35 | 1.66/1.34/2.48 | 0.32 | 6.1 |
| hexagon (Fig. 8) | 4.68 | 1.49/1.20/2.22 | 0.25 | 7.0 |
| hexagon (Fig. 6) | 4.28 | 1.25/2.09 | 0.32 | 5.8 |
| hexagon (Fig. 6) | 3.75 | 1.10/1.83 | 0.25 | 6.7 |
| hexagon (Fig. 6) | 2.1 | 0.56/0.84 | 0.30 | 12 |
| hexagon (Fig. 6) | 1.54 | 0.42/0.63 | 0.30 | 16.5 |
| hexagon (Fig. 6) | 1.33 | 0.37/0.55 | 0.30 | 18.5 |

**Claims**

1. Screen (1) for separating particulate materials from a liquid mass, which screen (1) comprises a pattern of slot-shaped passage openings (11; 21, 24, 26; 42, 43, 44; 52, 53, 54), separated by walls (12), for the liquid, wherein the pattern comprises pattern elements (20; 30; 41; 51), each of the pattern elements (20; 30; 41; 51) having three groups of passage openings, the passage openings within each group having the same orientation, which is different from the orientation of the passage openings of the other groups within said pattern element (20; 30; 41; 51), **characterized in that** each group of passage openings within each pattern element (20; 30; 41; 51) is also adjacent to groups of passage openings of neighbouring pattern elements (20; 30; 45; 55, 56), which groups of passage openings of neighbouring pattern elements (20; 30; 45; 55, 50) have a different orientation than the one of each group of passage openings adjacent thereto comprised in each neighbouring pattern elements.

2. Screen according to claim 1, **characterized in that** all neighbouring pattern elements (20; 30) are identical.

3. Screen according to claim 1 or 2, **characterized in that** the pattern elements (20; 30; 41; 51) are arranged in a regular manner within said pattern.

4. Screen according to one of the preceding claims, **characterized in that** a group with a certain orientation is arranged in a region (22; 23; 25) having the shape of a hexagon, which region (22; 23; 25) is surrounded on its six sides by alternately arranged hexagonal regions (22; 23; 25) having groups of passage openings with other orientations.

5. Screen according to claim 4, **characterized in that** the regions (22; 23; 25) have the shape of a regular hexagon.

6. Screen according to claim 4 or 5, **characterized in that** the orientations of the passage openings (21; 24; 26) in the three different groups (22; 23; 25) are rotated through 120° with respect to one another.

7. Screen according to one of the preceding claims, **characterized in that** the length of the slot-shaped openings is varied.

8. Screen according to claim 1, **characterized in that** said other pattern element (45; 55, 56) comprises one or more groups of passage openings (46) having a further orientation or orientations.

9. Assembly of a support screen (2) and a screen (1) according to one of the preceding claims.

10. Assembly according to claim 9, **characterized in that** the dimensions of the pattern element (20; 30; 41; 51) are smaller than the mesh width, a, of the support screen (2).

**Patentansprüche**

1. Schirm (1) zum Abtrennen von Partikeln von einer flüssigen Masse, umfassend ein Muster aus durch Wandelemente (12) getrennten schlitzförmigen Durchflussöffnungen (11; 21, 24, 26; 42, 43, 44; 52, 53, 54), wobei das Muster Musterelemente (20; 30; 41; 51) umfaßt, die jeweils drei Gruppen von Durchflussöffnungen aufweisen und die Durchflussöffnungen innerhalb einer jeden Gruppe dieselbe Orientierung haben, die von der Orientierung der Durchflussöffnungen der anderen Gruppen im jeweiligen Musterelement (20; 30; 41; 51) verschieden ist, **dadurch gekennzeichnet, dass** jede Gruppe von Durchflussöffnungen in jedem Musterelement (20; 30; 41; 51) auch an Gruppen von Durchflussöffnungen benachbarter Musterelemente (20; 30; 55) angrenzt, wobei diese Gruppen von Durchflussöffnungen benachbarter Musterelemente (20; 30; 55) eine von der Orientierung der Gruppe daran angrenzender Durchflussöffnungen in benachbarten Mustern abweichende Orientierung besitzen.

2. Schirm nach Anspruch 1, **dadurch gekennzeichnet, dass** alle benachbarten Musterelemente (20; 30) identisch sind.

3. Schirm nach Anspruch 1 oder 2, **dadurch gekennzeichnet, dass** die Musterelemente (20; 30; 41; 51) innerhalb des Musters regelmäßig angeordnet sind.

4. Schirm nach einem der vorigen Ansprüche, **dadurch gekennzeichnet, dass** eine Gruppe mit einer bestimmten Orientierung in einer Region (22; 23; 25) mit der Form eines Hexagons angeordnet ist, wobei diese Region (22; 23; 25) an ihren sechs Seiten von alternierend angeordneten hexagonalen Regionen (22; 23; 25) umgeben ist, welche Gruppen von Durchflussöffnungen anderer Orientierung aufweisen.

5. Schirm nach Anspruch 4, **dadurch gekennzeichnet, dass** die Regionen (22; 23; 25) die Form eines regelmäßigen Hexagons aufweisen.

6. Schirm nach Anspruch 4 oder 5, **dadurch gekennzeichnet, dass** die Orientierungen der Durchflussöffnungen (21; 24; 26) in den drei verschiedenen Gruppen (22; 23; 25) jeweils um 120° gegeneinander gedreht sind.

7. Schirm nach einem der vorigen Ansprüche, **dadurch gekennzeichnet, dass** die Länge der schlitzförmigen Öffnungen variiert wird.

8. Schirm nach Anspruch 1, **dadurch gekennzeichnet, dass** das andere Musterelement (45; 55, 56) eine oder mehrere Gruppen von Durchflussöffnungen (46) umfaßt, welche eine weitere Orientierung oder weitere Orientierungen aufweisen.

9. Konstruktion aus einem Stützschirm (2) und einem Schirm (1) nach einem der vorigen Ansprüche.

10. Konstruktion nach Anspruch 9, **dadurch gekennzeichnet, dass** die Dimensionen des Musterelements (20; 30; 41; 51) kleiner sind als die Maschenweite (a) des Stützschirms (2).

**Revendications**

1. Tamis (1) pour séparer des matériaux particulaires vis-à-vis d'une masse liquide, le tamis (1) comprenant un motif d'ouvertures (11; 21, 24, 26; 42, 43, 44; 52, 53, 54) de passage en forme de fentes, séparées par des parois (12), pour le liquide, dans lequel le motif comprend des éléments (20; 30; 41; 51) de motif, chacun des éléments (20; 30; 41; 51) de motif ayant trois groupes d'ouvertures de passage, les ouvertures de passage dans chaque groupe ayant la même orientation, qui est différente de l'orientation des ouvertures de passage des autres groupes dans ledit élément (20; 30; 41; 51) de motif, **caractérisé en ce que** chaque groupe d'ouvertures de passage, dans chaque élément (20; 30; 41; 51) de motif, est également adjacent à des groupes d'ouvertures de passage d'éléments (20; 30; 55) de motif voisins, ces groupes d'ouvertures de passage d'éléments (20; 30; 55) de motif voisins ayant une orientation différente de celle de chaque groupe d'ouvertures de passage leur étant adjacent, compris dans chacun des éléments de motif voisins.

**2.** Tamis selon la revendication 1, **caractérisé en ce que** la totalité des éléments (20; 30) de motif voisins sont identiques.

**3.** Tamis selon la revendication 1 ou 2, **caractérisé en ce que** les éléments (20; 30; 41; 51) de motif sont agencés de manière régulière dans ledit motif.

**4.** Tamis selon l'une des revendications précédentes, **caractérisé en ce qu'**un groupe ayant une certaine orientation est agencé en une région (22; 23; 25) ayant la forme d'un hexagone, cette région (22; 23; 25) étant entourée de ses six côtés, par des régions hexagonales (22; 23; 25) agencées de façon alternée, ayant des groupes d'ouvertures de passage ayant d'autres orientations.

**5.** Tamis selon la revendication 4, **caractérisé en ce que** les régions (22; 23; 25) ont la forme d'un hexagone régulier.

**6.** Tamis selon la revendication 4 ou 5, **caractérisé en ce que** les orientations des ouvertures de passage (21; 24; 26) situés dans les trois groupes (22; 23; 25) différents sont tournées de 120° les unes par rapport aux autres.

**7.** Tamis selon l'une des revendications précédentes, **caractérisé en ce que** la longueur des ouvertures en forme de fente est variable.

**8.** Tamis selon la revendication 1, **caractérisé en ce que** ledit autre élément de motif (45; 55, 56) comprend un ou plusieurs groupes d'ouvertures de passage (46) ayant une autre orientation ou d'autres orientations.

**9.** Ensemble de tamis support (2) et de tamis (1) selon l'une des revendications précédentes.

**10.** Ensemble selon la revendication 9, **caractérisé en ce que** les dimensions de l'élément de motif (20; 30; 41; 51) sont inférieures à la largeur de maille, a, du tamis support (2).

FIG:1.

FIG:2a.

FIG:2c.

FIG:2b.

FIG:2d.

Fig: 3.

Fig: 4.

Fig: 5.

Fig.6.

FIG. 8.

EP 0 956 131 B1

FIG:9.

15

FIG:10.

THEORETICAL SLOT LENGTH

Fig.11.

ANISOTROPIC TENSILE STRENGTH          ANISOTROPIC FLEXURAL STRENGTH

Fig.12.

EP 0 956 131 B1

TENSILE STRENGTH PERPENDICULAR     ◈     FLEXURAL STRENGTH PERPENDICULAR

Fig. 13.

EP 0 956 131 B1

19

FIG:14.

Fig. 15.

FIG:16.

FIG.17.

FIG:18.